# EUROPEAN PATENT SPECIFICATION

(11) **EP 1 756 244 B1**
(45) Date of publication and mention of the grant of the patent: **27.07.2011**
(21) Application number: 06715744.6
(22) Date of filing: 24.01.2006
(51) Int. Cl.: C09K 3/14

(54) **CERIUM OXIDE ABRASIVE AND SLURRY CONTAINING THE SAME**
CEROXIDSCHLEIFMITTEL UND DIESE ENTHALTENDE AUFSCHLÄMMUNG
ABRASIF D'OXYDE DE CERIUM ET BOUE LE CONTENANT

(30) Priority: 26.01.2005 KR 20050007153
(43) Date of publication of application: 28.02.2007
(73) Proprietor: LG Chem, Ltd., Youngdungpo-gu, Seoul 150-721 (KR)
(72) Inventor: NHO, Jun-seok, Daejeon 305-721 (KR); OH, Myoung-hwan, Yuseong-gu Daejeon 305-769 (KR); KIM, Jang-Yul, Daejeon 306-775 (KR); CHO, Seung-beom, Daejeon 305-358 (KR); KIM,Jong-pil, Daejeon 305-340 (KR)
(74) Representative: HOFFMANN EITLE
(86) International application number: PCT/KR2006/000271
(87) International publication number: WO 2006/080796

(56) References cited:
- EP-A- 1 234 801
- WO-A-2004/037722
- WO-A1-97/29510
- WO-A1-99/31195
- JP-A- 07 172 826
- JP-A- 10 106 989
- JP-A- 10 106 990
- JP-A- 10 106 991
- JP-A- 10 106 992
- US-A1- 2002 090 895
- US-A1- 2004 147 206

## Description

### TECHNICAL FIELD

The present invention relates to a cerium oxide abrasive and a polishing slurry.

### BACKGROUND ART

Cerium oxide is a high-performance ceramic material widely used for catalysts, phosphors, cosmetics, abrasives, etc. and it has been spotlighted as an inorganic abrasive such as a main raw material of a next-generation chemical mechanical polishing (CMP) slurry used in the fields of an STI (shallow trench Isolation) process of a semiconductor device, etc.

It is important that CMP slurry used in an STI CMP process has a polishing rate of a silicon oxide (SiO₂) film, a elective polishing property between a silicon oxide film and a silicon nitride (Si₃N₄) film and an anti-scratch property, etc. and a particle size, a shape, an oxidation property, crystallinity and strength of the abrasive cerium oxide powder should be controlled in order to manufacture such a slurry. Especially, the importance of chemical reaction with the SiO₂ film has been highlighted, and crystallinity and strength of the abrasive have been also of importance upon polishing a cerium oxide abrasive. Essentially, the cerium oxide has a lower strength than that of aluminum oxide (Al₂O₃) or silica oxide, both generally used for the ceramic abrasive. Nevertheless, the cerium oxide has been widely used as an abrasive of SiO₂ films or silica glass surface because the abrasive has a more rapid polishing rate than the conventional abrasives. It was shown that the mechanical polishing, as well as the chemical polishing of the cerium oxide mainly worked upon polishing the SiO₂ films, which was recent described in studies on the chemical reaction of cerium oxide (Journal of Non-Crystalline Solids, 283 (2001) pp129-136). Generally, it has been recognized that a polishing process proceeds while hydration of a series of SiO₂ films (-Si(OH)₃), mechanical removal of a hydration layer by an abrasive, dispersion in a solution of removed silicon hydride (Si (OH)₄), and its dissolution process are repeated in the mechanical polishing process of the SiO₂ films, and it has been known that such a mechanical polishing acted as a major tool in polishing cerium oxide. This thesis disclose that cerium oxide function to polish a SiO₂ film by removing, for example picking a SiO₂ mass from a surface of the SiO₂ film contrary to the mechanical polishing for removing only a hydration layer formed on its surface since chemical bonds of Si-O-Ce are generated due to a high content of SiO₂ in the cerium oxide, and its reactivity if the cerium oxide was used as the abrasive. Accordingly, chemical reactivity in a particle surface, a specific surface area, suitable strength of polishing particles, etc. should be, first of all, controlled in order to accomplish the faster polishing rate.

Meanwhile, a method for increasing a grain boundary having a high chemical activity is one of the most representative methods for enhancing a chemical reactivity of ceramic particles. The ceramic particles have chemically stable properties by having a complete crystal structure as the structure approaches its central region. On the contrary, the grain boundary or the surface has an incomplete crystal structure since the crystal structure cannot be basically complete. The chemical reactivity remains high enough to receive other elements or ions in order to compensate for the incomplete crystal structure. Accordingly, the polishing rate may be improved since the chemical reactivity is the higher and the bonds Si-O-Ce are generated the wider region if the cerium oxide powder has the smaller particle size and the higher specific surface area per unit gram.

The chemical reaction is a very important operating tool for the polishing process of the cerium oxide slurry, but a basic operating tool, a mechanical polishing action, may not be ignored. That is to say, if surfaces of a SiO₂ film and a cerium oxide abrasive are tightly coupled to each other, then a constant level of SiO₂ or Si (OH)₄ coupled to the surface of the abrasive should be removed from the surface of the SiO₂ film. If strength of the abrasive is not sufficient, the abrasive other than SiO₂ is broken, and then a cerium oxide mass adheres to the SiO₂ film. Therefore, the abrasive should have the sufficient self-strength so as to have a high polishing rate. Accordingly, cerium carbonate materials have a compact structure, and therefore it is preferred to maintain a constant strength after heat treatment even after it is phase-transitioned into cerium oxide composed of very small particles.

Meanwhile, strength of the abrasive particles is closely relevant to a problem of microscratches in the CMP process of the SiO₂ film. It has been recognized that the problem of microscratches was generated due to the mechanical polishing operation rather than the chemical reaction, and therefore may be mainly generated in an abrasive having a high strength of the abrasive particle and a high particle size. Accordingly, the abrasive particle has a high strength enough to remove the SiO₂ film, but it has a low strength enough not to generate microscratches. Also, SiO₂ or Si(OH)₄ removed from the SiO₂ film may be removed from a surface of the abrasive, and then dissolved in s solution so that the abrasive surface can function again in the chemical bonding with the SiO₂ film and the mechanical polishing. For the purpose of such a removal, it is considered as one of the most effective methods to separate cerium oxide particles to which a SiO₂ mass is already strongly coupled from the abrasive surface and dissolve the cerium oxide particles. Accordingly, soft abrasives may be more easily regenerated into new surfaces in a polishing process than that of hard abrasives.

Referring to the methods for synthesizing the conventional cerium oxide abrasives and the polishing slurry, Korean Patent Application No. 2000-7006683 by the company Hitachi chemical (Japan) disclose a method for synthesizing cerium oxide used for an abrasive material for CMP slurry, wherein cerium salts (cerium carbonate, cerium sulfate, cerium oxalate) are used as a raw material of cerium oxide and plasticized at 400 to 900 °C for 5 to 300 minutes to synthesize cerium oxide powder, and then the resultant cerium oxide powder was grinded with a jet mill, a ball mill or a beads mill to obtain a cerium oxide abrasive having a mean crystalline particle size of 5 to 250 nm.

It was described in the technique that the mean crystalline particle size was controlled within the range of 5 to 250 nm and the mean particle size of the abrasive was controlled within the range of 100 to 1500 nm so as to reduce formation of the microscratches in the CMP process. It was described in the said context that if the abrasive has the lower range than the mean particle size, then its polishing rate is suddenly reduced. This indicates that the polishing rate is suddenly reduced since the cerium oxide abrasive has a very low strength if the cerium carbonate which does not control a crystalline property is used as the raw material to synthesize an abrasive at a particle size of less than 5 nm. The abrasive has the smaller crystalline particles, the lower level of the microscratches is generated in polished surfaces, and therefore generation of the microscratches may be minimized if cerium oxide having a crystalline particle size of less than 5 nm is used as the abrasive, the cerium oxide having a sufficient polishing rate by suitably controlling the strength.

### DISCLOSURE OF INVENTION

To solve the above-described problems, it is an objective of the present invention to provide a method for preparing a cerium oxide abrasive capable of having a suitable strength even if it is phase-transitioned into cerium oxide at a low heat-treatment temperature using cerium carbonate having a hexagonal crystal structure as a raw material, as well as having a high chemical activity due to its low primary crystalline particle size of less than 5nm, minimizing generation of microscratches of a polished surface, and polishing at a high speed; a manufacturing method thereof and a polishing slurry containing the same.

Therefore, other -and these objects of the present invention may be all accomplished by the present invention as described later.

In order to achieve the above-described aspects of the present invention, there is provided a method of preparing a polycrystalline cerium oxide powder comprising: heat-treating dried cerium carbonate having a hexagonal crystalline structure and a particle size of 0.1 to 20 µm at a temperature of 200∼600°C for 10 minutes to 24 hours under an oxidation environment, thereby preparing polycrystalline cerium oxide powder comprising primary crystalline particles of cerium oxide having a mean size less than 5 nm; and milling or dispersing the primary crystalline particles of cerium oxide, thereby preparing polycrystalline cerium oxide powder having a mean particle size of 30 to 1000 nm.

Hereinafter, the present invention will be described in detail, as follows.

The method of the present invention provides a cerium oxide powder abrasive having a hexagonal crystal structure manufactured by a high-pressure precipitation method, as well as having a mean crystalline particle size of less than 5 nm and a mean dispersed-abrasive particle size of 30 to 1000 nm by heat-treating a hexagonal cerium carbonate as a raw material, at a low temperature of 200 to 600 °C for 10 minutes to 24 hours under an oxidation environment, and having a high polishing rate and being free from microscratches when various SiO₂ films are polished and SiO₂/Si₃N₄ films are selectively polished; and a dispersed slurry thereof.

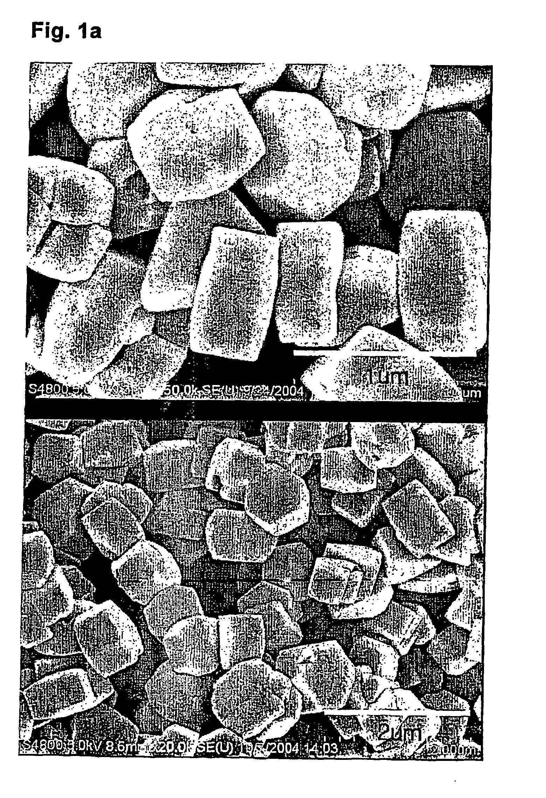

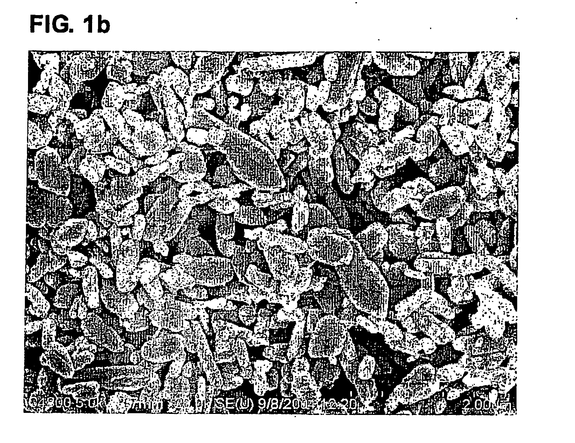

In the present invention, the cerium carbonate having a particle size of 0.1 to 20 µm manufactured by the high-pressure precipitation method is used as a raw material, The cerium carbonate has a hexagonal crystal structure as shown in FIG. 1. It was confirmed that the cerium carbonate having an orthorhombic crystal structure is phase-transitioned into cerium oxide having a more poor quality due to incompact components, and therefore its polishing rate is relatively slow. Also, although orthorhombic cerium carbonate was heat-treated at the same temperature as in the hexagonal cerium carbonate, it is difficult to control its primary particle size at less than 5 nm.

In the present invention, the dried cerium carbonate is heat-treated, at 200 to 600 °C for 10 minutes to 24 hours under an oxidation environment, using various heating furnaces such as a box-type heating furnace, an automatic continuous furnace or a rotary continuous furnace. If the dried cerium carbonate is heat-treated at less than 200 °C, the cerium carbonate is not completely phase-transitioned into cerium oxide, or its polishing rate is reduced due to a very low strength of the abrasive, while if its temperature exceeds 600 °C, a primary particle size of the abrasive is increased or a particle strength of the abrasive is enhanced, resulting in reduction of a polishing rate and formation of microscratches in a polished surface.

In the present invention, the cerium oxide crystalline particles are controlled to have a mean particle size of less than 5 nm, and the crystalline particle size is measured using a transmission electron microscope (TEM). The particle size is represented by a square root of product of the longest particle diameter and the shortest particle diameter. A mean value of the particle sizes is referred to as a mean value of particle sizes where a cumulative percent of particle volumes obtained from sizes of the particles reaches 50 %.

A dry milling method and a wet milling method may be used as a milling process of the present invention. The dry milling includes a zet mill, a disk mill, a beads mill, etc., and the wet milling includes a ball mill, an attrition mill, a dyno mill, etc. The dry milling is generally used as pre-treatment procedure of the wet milling capable of controlling a more fine and precise particle size if rather coarse and large particles are milled and dispersed. Repetition of the process may be avoided, as well as a more improved control of the particle size and an improved milling efficiency may be accomplished if a suitable amount of a dispersant was mixed to mill the particles upon the wet milling. The dry and wet milling methods are carried alone or in a suitable combination thereof in the present invention.

In the present invention, the milled or dispersed cerium oxide abrasive is controlled to have a particle size of less than 3 µm and a mean particle size of 30 to 1000 nm, and the particle size is measured using a particle size distribution analyzer (Horiba LA-910).

The cerium oxide powder prepared by the method of the present invention may be incorporated into a slurry including the cerium oxide powder and a dispersant.

The powder slurry is provided by mixing the cerium oxide powder milled in the mean particle size of 30 to 1000 nm, the dispersant, and distilled water.

Non-ionic polymers such as polyvinyl alcohol, ethylene glycol, glycerine, polyethylene glycol, polypropylene glycol, polyvinyl pyrrolidone, etc. may be used as the dispersant used in the present invention. Anionic polymers such as polyacrylic acid, ammonium polyacrylate salt, polyacrylmaleic acid, etc. are also used herein. Also, the non-ionic and anionic dispersants may be used in combination thereof. In a mixing ratio of the dispersants, it is suitable to include the dispersant at an amount of 0.0001 to 10.0 parts by weight, and preferably 0.02 to 3.0 parts by weight, based on 100 parts by weight of the cerium oxide powder abrasive particle.

If content of the dispersant is less than 0.001 parts by weight, then precipitation is accelerated due to a low dispersion force, and therefore precipitation (as referred to as a separation of a liquid from a solid) may be generated even during translocation of the polishing slurry. As a result, the abrasive may be ununiformly supplied. Also, if content of the dispersant exceeds 10.0 parts by weight, then the dispersion force may be reduced, as well as a thick dispersant polymer layer capable of functioning as a kind of a cushion around the abrasive particles may be formed. Accordingly, the polishing rate becomes very slow because of a very low possibility of the abrasive surface to be in contact with a polished surface of silica.

### BRIEF DESCRIPTION OF THE DRAWINGS

These and other features, aspects, and advantages of preferred examples of the present invention will be more fully described in the following detailed description, taken accompanying drawings. In the drawings:
FIG. 1A is an SEM photograph showing hexagonal cerium carbonate having a hexagonal crystal structure manufactured using a high-pressure precipitation method, which is used in one example of the present invention,
FIG. 1B is an SEM photograph showing needle-type cerium carbonate having a hexagonal crystal structure manufactured using a high-pressure precipitation method, which is used in one example of the present invention,
FIG. 2 is an SEM photograph showing cerium carbonate having a conventional orthorhombic crystal structure, which is used in one comparative example of the present invention,
FIG. 3 is a graph showing a XRD pattern of the cerium carbonate according to one example of the present invention,
FIG. 4 is a graph showing a XRD pattern of the cerium oxide according to one example of the present invention,
FIG. 5 a graph showing a XRD analysis after drying the orthorhombic cerium carbonate according to one comparative example of the present invention at 100 °C,
FIG. 6 is an SEM photograph showing a cerium oxide abrasive milled and dispersed according to a method of Example 1 of the present invention,
FIG. 7 is an SEM photograph showing a cerium oxide abrasive milled and dispersed according to a method of Example 1 of the present invention,
FIG. 8 is an SEM photograph showing a cerium oxide abrasive milled and dispersed according to a method of Example 3 of the present invention,
FIG. 9 is an SEM photograph showing a cerium oxide abrasive milled and dispersed according to a method of Example 3 of the present invention,
FIG. 10 is an SEM photograph showing a cerium oxide abrasive milled and dispersed according to a method of Example 3 of the present invention,
FIG. 11 is an SEM photograph showing a cerium oxide abrasive according to Comparative Example 1 of the present invention, and
FIG. 12 is an SEM photograph showing a cerium oxide abrasive according to Comparative Example 2 of the present invention.

### BEST MODES FOR CARRYING OUT THE INVENTION

Hereinafter, preferred examples of the present invention will be described in detail with reference to the accompanying drawings.

### Example 1

A hexagonal cerium carbonate powder having a hexagonal crystal structure, manufactured using a high-pressure precipitation method was washed with distilled water and ethanol three or more times, and dried in a drying oven at 100 °C for 24 hours. 1kg of the dried powder was put into a furnace made of alumina, and heat-treated at 200 °C for 6 hours under an oxidation condition, in which sufficient air is supplied thereto, to manufacture a light yellow cerium oxide.

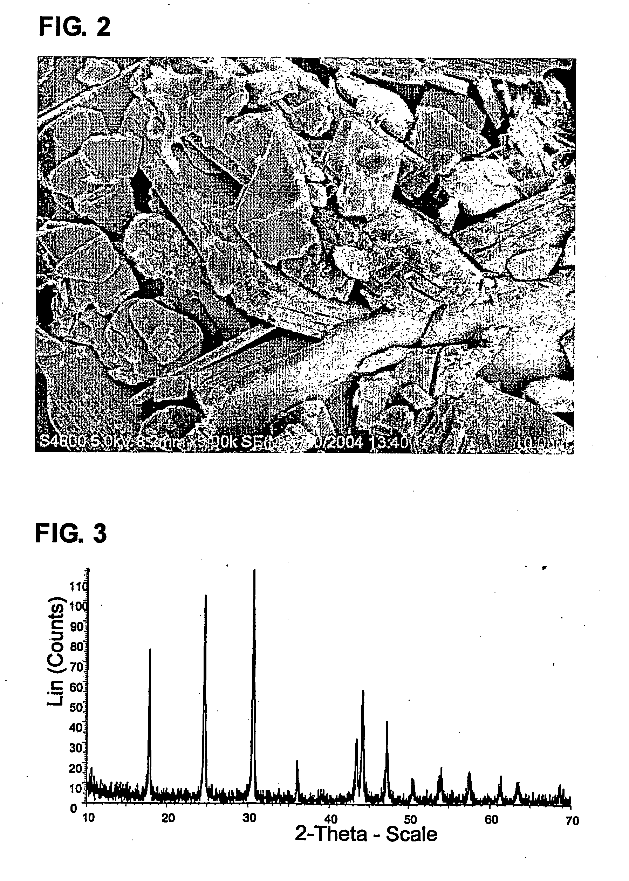

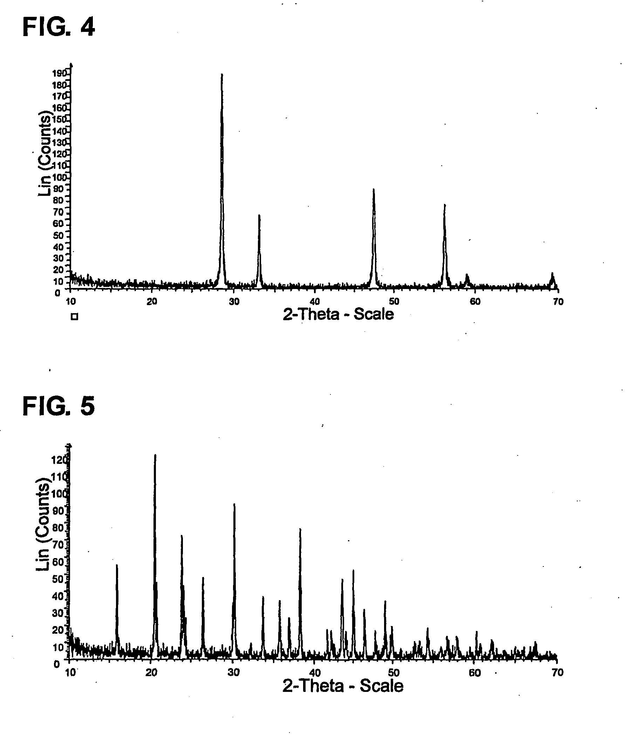

From an XRD analysis of the powder, it was confirmed that the cerium carbonate is all phase-transitioned into cerium oxide. The XRD analyses are shown in FIG. 3 and FIG. 4. As a result of TEM observation, a mean particle size is in the range of less than 5 nm. A specific surface area measured by a BET method (Brunauer, Emmett, Teller) was 185 m²/g.

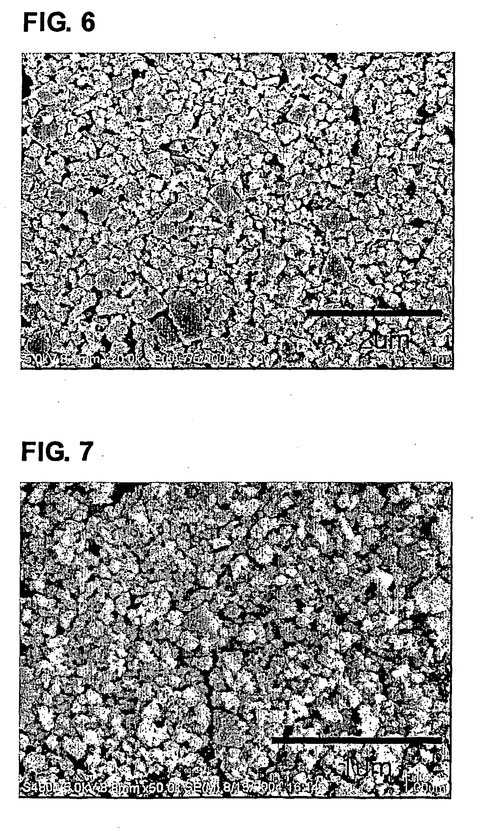

500 g of the prepared cerium oxide was mixed with 1 kg of a ball made of zirconia having a diameter of 3 mm, and put into a ball mill container, and then milled at 250 rpm for 3 hours, and the cerium oxide powder was separated from the zirconia ball, and dispersed in 5L of distilled water. 10 g of a polyacrylic acid dispersant (Aldrich, Mw 2000) was added as the dispersant, and ammonia water was added to adjust a pH to 7.5. For the purpose of a secondary milling and dispersion, a dispersion solution of cerium oxide was mixed with 1 kg of a boll made of zirconia having a diameter of 1 mm, and put into a ball mill container made of polypropylene, and then milled and dispersed at 250 rpm for 2 hours. The resultant dispersed slurry was filtered through a 1 µm filter, and distilled waster was added to obtain a polishing slurry having an abrasive content of 1 % by weight. When a particle size of the abrasive particles is measured using a particle size distribution analyzer (Horiba LA-910), it was confirmed that the abrasive particles had a particle size distribution of approximately 50 to 200 nm, and a mean particle size of 92 nm. Also, a SEM photograph of the cerium oxide abrasive milled/dispersed with the aforementioned method is shown in FIG. 6.

In order to measure a polishing performance of the manufactured polishing slurry, an Si substrate, on which SiO₂ was deposited using a PECVD (Plasma Enhanced Chemical Vapor Deposition), was adhered to a substrate holder of a CMP polishing device (a head) and polished for 1 minute while adding at a drop the polishing slurry manufactured at a rate of 100 ml per a minute to a platen provided with a polyurethane polishing pad. At this time, the substrate holder was pressured on the platen under a pressure of 280 g/cm², and the polishing was carried out by rotating the substrate holder and the platen at a rotating speed of 90 rpm, respectively. After the polishing, the substrate was washed, and then a thickness change of the films was measured before and after the polishing using a film thickness measuring system (Nanometrics Inc., Nanospec 6100, U.S.A). As a result, it was confirmed that the SiO₂ films with 3552Å was uniformly polished over the substrate, and it was also observed that no microscratch was present using an optical microscope.

### Example 2

A hexagonal cerium carbonate powder having a hexagonal crystal structure, manufactured using a high-pressure precipitation method was washed with distilled water and ethanol three or more times, and dried in a drying oven at 100 °C for 24 hours. 1kg of the dried powder was put into a furnace made of alumina, and heat-treated at 300 °C for 2 hours under an oxidation condition, in which sufficient air is supplied thereto, to manufacture a light yellow cerium oxide.

From an XRD analysis of the powder, it was confirmed that the cerium carbonate is all phase-transitioned into cerium oxide. The XRD analyses are shown in FIG. 3 and FIG. 4. As a result of TEM observation, a mean particle size is in the range of less than 5 nm. A specific surface area measured by a BET method was 143.7 m²/g.

500 g of the prepared cerium oxide was mixed with 1 kg of a ball made of zirconia having a diameter of 3 mm, and put into a ball mill container, and then milled at 250 rpm for 3 hours, and the cerium oxide powder was separated from the zirconia ball, and dispersed in 5L of distilled water. 10 g of a polyacrylic acid dispersant (Aldrich, Mw 2000) was added as the dispersant, and ammonia water was added to adjust a pH to 7.5. For the purpose of a secondary milling and dispersion, 1 kg of a boll made of zirconia having a diameter of 0.1 mm was charged in to an attrition mill, and a dispersion solution was dispersed at 2000 rpm total 4 times while translocated into a feeding orifice using a pump. The resultant dispersed slurry was filtered through a 1 µm filter, and distilled waster was added to obtain a polishing slurry having an abrasive content of 1 % by weight. When a particle size of the abrasive particles is measured using a particle size distribution analyzer (Horiba LA-910), it was confirmed that the abrasive particles had a particle size distribution of approximately 50 to 200 nm, and a mean particle size of 95 nm. Also, a SEM photograph of the cerium oxide abrasive milled/dispersed with the aforementioned method is shown in FIG. 7.

In order to measure a polishing performance of the manufactured polishing slurry, the polishing was carried out in the same manner as in Example 1. After the polishing, the substrate was washed, and then a thickness change of the films was measured before and after the polishing using a film thickness measuring system (Nanometrics Inc. , Nanospec 6100, U.S.A). As a result, it was confirmed that the SiO₂ films with 3763Å was uniformly polished over the substrate, and it was also observed that no microscratch was present using an optical microscope.

### Example 3

A hexagonal cerium carbonate powder having a hexagonal crystal structure, manufactured using a high-pressure precipitation method was washed with distilled water and ethanol three or more times, and dried in a drying oven at 100 °C for 24 hours. 1kg of the dried powder was put into a furnace made of alumina, and heat-treated at 400 °C for 1 hour under an oxidation condition, in which sufficient air is supplied thereto, to manufacture a light yellow cerium oxide.

From an XRD analysis of the powder, it was confirmed that the cerium carbonate is all phase-transitioned into cerium oxide. The XRD analyses are shown in FIG. 3 and FIG. 4. As a result of TEM observation, a mean particle size is in the range of less than 5 nm. A specific surface area measured by a BET method was 101 m²/g.

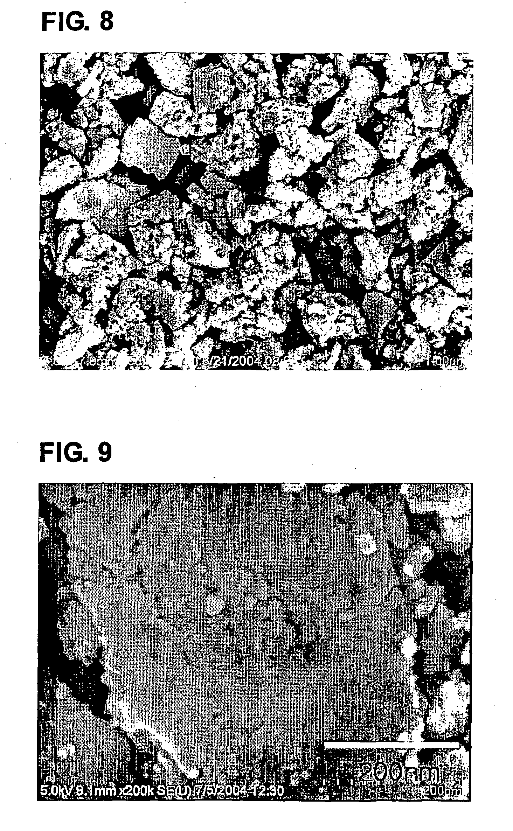

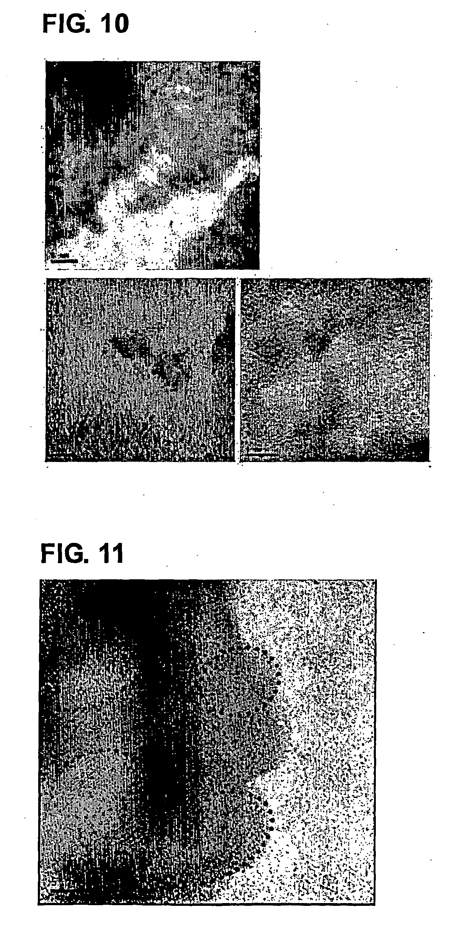

500 g of the prepared cerium oxide was dry milled with a jet mill, and then dispersed in 5L of distilled water. 10 g of a polyacrylic acid dispersant (Aldrich, Mw 2000) was added as the dispersant, and ammonia water was added to adjust a pH to 7.5. For the purpose of a secondary milling and dispersion, 1 kg of a boll made of zirconia having a diameter of 0.1 mm was charged in to an attrition mill, and a dispersion solution was dispersed at 2000 rpm total 4 times while translocated into a feeding orifice using a pump. The resultant dispersed slurry was filtered through a 1 µm filter, and distilled waster was added to obtain a polishing slurry having an abrasive content of 1 % by weight. When a particle size of the abrasive particles is measured using a particle size distribution analyzer (Horiba LA-910), it was confirmed that the abrasive particles had a particle size distribution of approximately 50 to 300 µm, and a mean particle size of 107 nm. Also, SEM photographs of the cerium oxide abrasive milled/dispersed with the aforementioned method are shown in FIGs. 8 and 9. A TEM photograph is shown in FIG. 10.

In order to measure a polishing performance of the manufactured polishing slurry, the polishing was carried out in the same manner as in Example 1. After the polishing, the substrate was washed, and then a thickness change of the films was measured before and after the polishing using a film thickness measuring system (Nanometrics Inc., Nanospec 6100, U.S.A). As a result, it was confirmed that the SiO₂ films with 3842Å was uniformly polished over the substrate, and it was also observed that no microscratch was present using an optical microscope.

### Example 4

A hexagonal cerium carbonate powder having a hexagonal crystal structure, manufactured using a high-pressure precipitation method was washed with distilled water and ethanol three or more times, and dried in a drying oven at 100 °C for 24 hours. 1kg of the dried powder was put into a furnace made of alumina, and heat-treated at 500 °C for 30 minutes under an oxidation condition, in which sufficient air is supplied thereto, to manufacture a light yellow cerium oxide.

From an XRD analysis of the powder, it was confirmed that the cerium carbonate is all phase-transitioned into cerium oxide. The XRD analyses are shown in FIG. 3 and FIG. 4. As a result of TEM observation, a mean particle size is in the range of less than 5 nm. A specific surface area measured by a BET method was 81.7 m²/g.

500 g of the prepared cerium oxide was dispersed in the same manner as in Example 3. The resultant dispersed slurry was filtered through a 1 µm filter, and distilled waster was added to obtain a polishing slurry having an abrasive content of 1 % by weight. When a particle size of the abrasive particles is measured using a particle size distribution analyzer (Horiba LA-910), it was confirmed that the abrasive particles had a particle size distribution of approximately 50 to 300 nm, and a mean particle size of 110.7 nm.

In order to measure a polishing performance of the manufactured polishing slurry, the polishing was carried out in the same manner as in Example 1. After the polishing, the substrate was washed, and then a thickness change of the films was measured before and after the polishing using a film thickness measuring system (Nanometrics Inc., Nanospec 6100, U.S.A). As a result, it was confirmed that the SiO₂ films with 4052 Å was uniformly polished over the substrate, and it was also observed that no microscratch was present using an optical microscope.

### Example 5

A hexagonal cerium carbonate powder having a hexagonal crystal structure, manufactured using a high-pressure precipitation method was washed with distilled water and ethanol three or more times, and dried in a drying oven at 100°C for 24 hours. 1kg of the dried powder was put into a furnace made of alumina, and heat-treated at 500 °C for 30 minutes under an oxidation condition, in which sufficient air is supplied thereto, to manufacture a light yellow cerium oxide.

From an XRD analysis of the powder, it was confirmed that the cerium carbonate is all phase-transitioned into cerium oxide. The XRD analyses are shown in FIG. 3 and FIG. 4. As a result of TEM observation, a mean particle size is in the range of less than 5 nm. A specific surface area measured by a BET method was 81.7 m²/g.

A dispersion solution was dispersed at a rotating speed of 1500 rpm in an attrition mill total 4 times while dispersing 500 g of the prepared cerium oxide in the same manner as in Example 3. The resultant dispersed slurry was filtered through a 1 µm filter, and distilled waster was added to obtain a polishing slurry having an abrasive content of 1 % by weight. When a particle size of the abrasive particles is measured using a particle size distribution analyzer (Horiba LA-910), it was confirmed that the abrasive particles had a particle size distribution of approximately 50 to 400 nm, and a mean particle size of 143.6 nm.

In order to measure a polishing performance of the manufactured polishing slurry, the polishing was carried out in the same manner as in Example 1. After the polishing, the substrate was washed, and then a thickness change of the films was measured before and after the polishing using a film thickness measuring system (Nanometrics Inc., Nanospec 6100, U.S.A). As a result, it was confirmed that the SiO₂ films with 4522Å was uniformly polished over the substrate, and it was also observed that no microscratch was present using an optical microscope.

### Example 6

A hexagonal cerium carbonate powder having a hexagonal crystal structure, manufactured using a high-pressure precipitation method was washed with distilled water and ethanol three or more times, and dried in a drying oven at 100 °C for 24 hours. 1kg of the dried powder was put into a furnace made of alumina, and heat-treated at 500 °C for 30 minutes under an oxidation condition, in which sufficient air is supplied thereto, to manufacture a light yellow cerium oxide.

From an XRD analysis of the powder, it was confirmed that the cerium carbonate is all phase-transitioned into cerium oxide. The XRD analyses are shown in FIG. 3 and FIG. 4. As a result of TEM observation, a mean particle size is in the range of less than 5 nm. A specific surface area measured by a BET method was 81.7 m²/g.

A dispersion solution was dispersed at a rotating speed of 2000 rpm in an attrition mill total 3 times while dispersing 500 g of the prepared cerium oxide in the same manner as in Example 3. The resultant dispersed slurry was filtered through a 1 µm filter, and distilled waster was added to obtain a polishing slurry having an abrasive content of 1 % by weight. When a particle size of the abrasive particles is measured using a particle size distribution analyzer (Horiba LA-910), it was confirmed that the abrasive particles had a particle size distribution of approximately 50 to 500 nm, and a mean particle size of 184.3 nm.

In order to measure a polishing performance of the manufactured polishing slurry, the polishing was carried out in the same manner as in Example 1. After the polishing, the substrate was washed, and then a thickness change of the films was measured before and after the polishing using a film thickness measuring system (Nanometrics, Inc., Nanospec 6100, U.S.A). As a result, it was confirmed that the SiO₂ films with 5008 Å was uniformly polished over the substrate, and it was also observed that no microscratch was present using an optical microscope.

### Example 7

A hexagonal cerium carbonate powder having a hexagonal crystal structure, manufactured using a high-pressure precipitation method was washed with distilled water and ethanol three or more times, and dried in a drying oven at 100 °C for 24 hours. 1kg of the dried powder was put into a furnace made of alumina, and heat-treated at 600 °C for 10 minutes under an oxidation condition, in which sufficient air is supplied thereto, to manufacture a light yellow cerium oxide.

From an XRD analysis of the powder, it was confirmed that the cerium carbonate is all phase-transitioned into cerium oxide. The XRD analyses are shown in FIG. 3 and FIG. 4. As a result of TEM observation, a mean particle size is in the range of less than 5 nm. A specific surface area measured by a BET method was 79.6 m²/g.

500 g of the prepared cerium oxide was dispersed in the same manner as in Example 3. The resultant dispersed slurry was filtered through a 1 µm filter, and distilled waster was added to obtain a polishing slurry having an abrasive content of 1% by weight. When a particle size of the abrasive particles is measured using a particle size distribution analyzer (Horiba LA-910), it was confirmed that the abrasive particles had a particle size distribution of approximately 50 to 450 nm, and a mean particle size of 156.2 nm.

In order to measure a polishing performance of the manufactured polishing slurry, the polishing was carried out in the same manner as in Example 1. After the polishing, the substrate was washed, and then a thickness change of the films was measured before and after the polishing using a film thickness measuring system (Nanometrics, Inc., Nanospec 6100, U.S.A). As a result, it was confirmed that the SiO₂ films with 4528Å was uniformly polished over the substrate, and it was also observed that no microscratch was present using an optical microscope.

### Example 8

A needle-type cerium carbonate powder having a hexagonal crystal structure, manufactured using a high-pressure precipitation method was washed with distilled water and ethanol three or more times, and dried in a drying oven at 100 °C for 24 hours. 1kg of the dried powder was put into a furnace made of alumina, and heat-treated at 500 °C for 30 minutes under an oxidation condition, in which sufficient air is supplied thereto, to manufacture a light yellow cerium oxide.

From an XRD analysis of the powder, it was confirmed that the cerium carbonate is all phase-transitioned into cerium oxide. The XRD analyses are shown in FIG. 3 and FIG. 4. As a result of TEM observation, a mean particle size is in the range of less than 5 nm. A specific surface area measured by a BET method was 83.5 m²/g.

500 g of the prepared cerium oxide was dispersed in the same manner as in Example 3. The resultant dispersed slurry was filtered through a 1 µm filter, and distilled waster was added to obtain a polishing slurry having an abrasive content of 1 % by weight. When a particle size of the abrasive particles is measured using a particle size distribution analyzer (Horiba LA-910), it was confirmed that the abrasive particles had a particle size distribution of approximately 50 to 300 nm, and a mean particle size of 114.5 nm.

In order to measure a polishing performance of the manufactured polishing slurry, the polishing was carried out in the same manner as in Example 1. After the polishing, the substrate was washed, and then a thickness change of the films was measured before and after the polishing using a film thicknessmeasuring system (Nanometrics, Inc., Nanospec 6100, U.S.A). As a result, it was confirmed that the SiO₂ films with 4153 Å was uniformly polished over the substrate, and it was also observed that no microscratch was present using an optical microscope.

### Comparative example 1

A conventional cerium carbonate (the company, Sineng) powder having the same structure as in FIG. 2 was dried at 100 °C in a drying oven for 24 hours. From an XRD analysis after drying, it was confirmed that the cerium carbonate powder had an orthorhombic crystal structure. The XRD analysis is shown in FIG. 5. 1kg of the dried powder was put into a furnace made of alumina, and heat-treated at 400 °C for 1 hour under an oxidation condition, in which sufficient air is supplied thereto, to manufacture a light yellow cerium oxide.

From an XRD analysis of the powder, it was confirmed that the cerium carbonate is all phase-transitioned into cerium oxide. The XRD analyses are shown in FIG. 3 and FIG. 4. As a result of TEM observation, a mean particle size is in the range of less than 5 nm. A specific surface area measured by a BET method was 47.2 m²/g.

500 g of the prepared cerium oxide was mixed with 1 kg of a ball made of zirconia having a diameter of 3 mm, and put into a ball mill container, and then milled at 250 rpm for 3 hours, and the cerium oxide powder was separated from the zirconia ball, and dispersed in 5L of distilled water. 10 g of a polyacrylic acid-based dispersant was added as the dispersant, and ammonia water was added to adjust a pH to 7.5. For the purpose of a secondary milling and dispersion, 1 kg of a boll made of zirconia having a diameter of 0.1 mm was charged in to an attrition mill, and a dispersion solution was dispersed at 2000 rpm total 4 times while translocated into a feeding orifice using a pump. The resultant dispersed slurry was filtered through a 1 µm filter, and distilled waster was added to obtain a polishing slurry having an abrasive content of 1 % by weight. When a particle size of the abrasive particles is measured using a particle size distribution analyzer (Horiba LA-910), it was confirmed that the abrasive particles had a particle size distribution of approximately 50 to 300 nm, and a mean particle size of 139 nm. Also, a TEM photograph of the cerium oxide abrasive milled/dispersed with the aforementioned method is shown in FIG. 11.

In order to measure a polishing performance of the manufactured polishing slurry, the polishing was carried out in the same manner as in Example 1. After the polishing, the substrate was washed, and then a thickness change of the films was measured before and after the polishing using a film thickness measuring system (Nanometrics, Inc., Nanospec 6100, U.S.A). As a result, it was confirmed that the SiO₂ films with 1923 Å was polished, and it was also observed that microscratches were present using an optical microscope.

### Comparative example 2

A conventional cerium carbonate (the company, Sineng) powder having the same structure as in FIG. 2 was dried at 100 °C in a drying oven for 24 hours. From an XRD analysis after drying, it was confirmed that the cerium carbonate powder had an orthorhombic crystal structure. The XRD analysis is shown in FIG. 5. 1kg of the dried powder was put into a furnace made of alumina, and heat-treated at 600 °C for 30 minutes under an oxidation condition, in which sufficient air is supplied thereto, to manufacture a light yellow cerium oxide.

From an XRD analysis of the powder, it was confirmed that the cerium carbonate is all phase-transitioned into cerium oxide. The XRD analyses are shown in FIG. 3 and FIG. 4. As a result of TEM observation, a mean particle size is in the range of less than 20 nm. A specific surface area measured by a BET method was 25.7 m²/g.

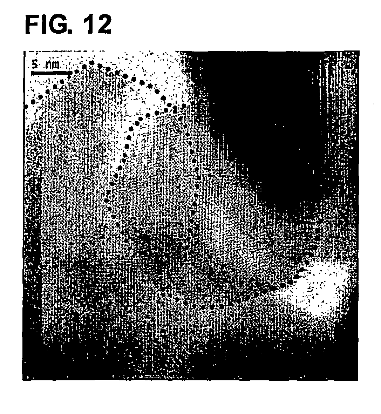

A dispersion solution was dispersed at a rotating speed of 2000 rpm in an attrition mill total 3 times while dispersing 500 g of the prepared cerium oxide in the same manner as in Example 3. The resultant dispersed slurry was filtered through a 1 µm filter, and distilled waster was added to obtain a polishing slurry having an abrasive content of 1 % by weight. When a particle size of the abrasive particles is measured using a particle size distribution analyzer (Horiba LA-910), it was confirmed that the abrasive particles had a particle size distribution of approximately 50 to 300 nm, and a mean particle size of 130 nm. Also, a TEM photograph of the cerium oxide abrasive milled/dispersed with the aforementioned method is shown in FIG. 12.

In order to measure a polishing performance of the manufactured polishing slurry, the polishing was carried out in the same manner as in Example 1. After the polishing, the substrate was washed, and then a thickness change of the films was measured before and after the polishing using a film thickness measuring system (Nanometrics, Inc., Nanospec 6100, U.S.A). As a result, it was confirmed that the SiO₂ films with 2533 Å was polished, and it was also observed that microscratches were present using an optical microscope.

Physical properties of the cerium oxide powders of said Examples 1 to 7 and Comparative examples 1 to 2, such as a crystalline particle size, a specific surface area, an abrasive particle size distribution, a mean abrasive particle size, a polishing rate and a presence of microscratches, are listed in the following Table 1.

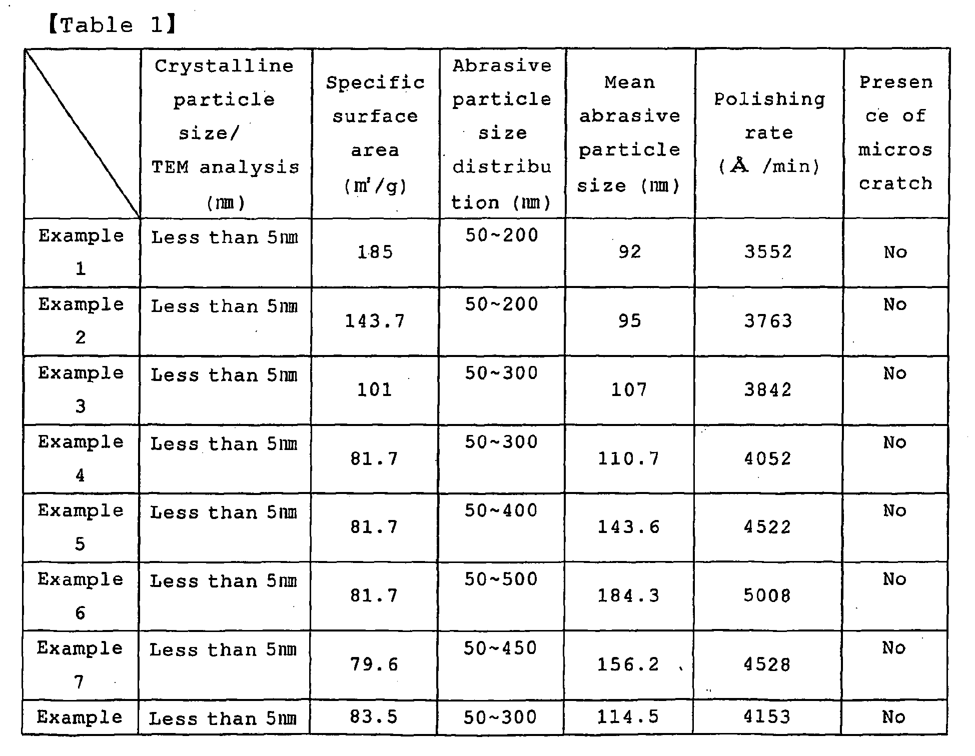

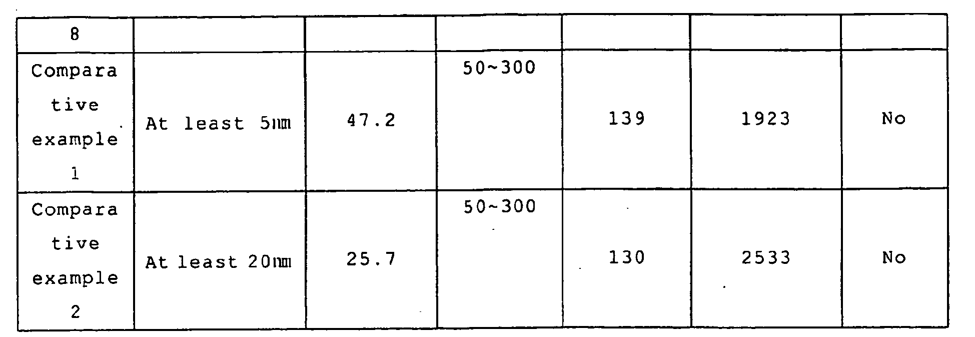

As seen in the Table 1, it was revealed that the polishing slurries of the examples containing the cerium oxide powder, which is obtained by using the cerium carbonate having a hexagonal particulate shape and a hexagonal crystal structure manufactured using the high-pressure precipitation method, had the higher polishing rates than that of the polishing slurries of the comparative examples manufactured using the ceriumcarbonate having the conventional orthorhombic crystal structure, as well as was free of the microscratches.

### INDUSTRIAL APPLICABILITY

The polishing slurry containing the cerium oxide powder prepared by the method according to the present invention may be useful to have the high polishing rate, and such excellent polishing capability as to be uniformly polished generally and to be free from microscratches when various SiO₂ films and SiO₂-Si₃N₄ films are selectively polished.

## Claims

1. A method of preparing a polycrystalline cerium oxide powder comprising:
heat-treating dried cerium carbonate having a hexagonal crystalline structure and particle size of 0.1 to 20 µm at the temperature of 200-600°C for 10 minutes to 24 hours under an oxidation environment, thereby preparing polycrystalline cerium oxide powder comprising primary crystalline particles of cerium oxide having a mean size less than 5 nm; and
milling or dispersing the primary crystalline particles of cerium oxide, thereby preparing polycrystalline cerium oxide powder having a mean particle size of 30 to 1000 nm.

## Patentansprüche

1. Verfahren zur Herstellung eines polykristallinen Ceroxidpulvers, umfassend:
Wärmebehandeln von getrocknetem Cercarbonat, das eine hexagonale kristalline Struktur und eine Partikelgröße von 0,1 bis 20 µm aufweist, bei einer Temperatur von 200 bis 600°C für 10 Minuten bis 24 Stunden in einer Oxidationsumgebung, wodurch polykristallines Ceroxidpulver hergestellt wird, das kristalline Primärpartikel von Ceroxid mit einer mittleren Größe von weniger als 5 nm umfasst; und
Mahlen oder Dispergieren der kristallinen Primärpartikel von Ceroxid, wodurch polykristallines Ceroxidpulver mit einer mittleren Partikelgröße von 30 bis 1.000 nm hergestellt wird.

## Revendications

1. Procédé de préparation d'une poudre d'oxyde de cérium polycristalline comprenant le fait :
de traiter à la chaleur le carbonate de cérium séché ayant une structure cristalline hexagonale et une taille particulaire de 0,1 à 20 µm à une température allant de 200 à 600°C pendant 10 minutes à 24 heures dans un environnement d'oxydation, préparant ainsi une poudre d'oxyde de cérium polycristalline comprenant des particules cristallines primaires d'oxyde de cérium ayant une taille moyenne inférieure à 5 nm ; et
de broyer ou disperser les particules cristallines primaires de l'oxyde de cérium, préparant ainsi une poudre d'oxyde de cérium polycristalline ayant une taille particulaire moyenne de 30 à 1000 nm.
